# DEMANDE DE BREVET EUROPEEN

(11) **EP 3 272 255 A1**
(43) Date de publication de la demande: **24.01.2018**
(21) Numéro de dépôt: 17182682.9
(22) Date de dépôt: 21.07.2017
(51) Int. Cl.: A47J 27/00, A47J 27/04, A47J 27/62, G05D 23/19

(54) **MÉTHODE DE CONTRÔLE DE CUISEUR ÉLECTRIQUE**

(30) Priorité: 22.07.2016 FR 1657065
(71) Demandeur: SEB S.A., 69130 Ecully (FR)
(72) Inventeur: LV, Hua, Hangzhou, Zhejiang 310051 (CN); MA, Chao, Hangzhou, Zhejiang 310051 (CN); GOYON, Annabelle, 21120 MARCILLY-SUR-TILLE (FR)
(74) Mandataire: Cémeli, Eric Philippe Laurent

(57) **Abrégé**

La présente invention concerne une méthode de contrôle de cuiseur électrique, y compris : après activation, le cuiseur électrique entre dans le processus de rinçage et cuisson à l'eau du riz ; lors du rinçage et de la cuisson à l'eau du riz en une seule fois, l'enclenchement de l'élément de régulation de la pression (50) du cuiseur électrique fait en sorte que la pression à l'intérieur du compartiment formé par l'intervalle situé entre la surface externe du panier à vapeur (3) et la paroi interne du récipient interne (2) est supérieure à la pression à l'intérieur de la chambre de remplissage et ceci pendant la première durée programmée t1, puis le fonctionnement continu de l'élément de régulation de la pression (50) rend égales les valeurs de pression à l'intérieur du compartiment et à l'intérieur de la chambre de remplissage (11), ceci pendant la seconde durée programmée t2 ; afin de terminer le processus de rinçage et cuisson à l'eau du riz , le processus de rinçage et cuisson à l'eau du riz est répété N1 fois ; le cuiseur électrique entre alors dans le processus de cuisson à la vapeur, le fonctionnement de l'élément de régulation de la pression (50) équilibre la pression à l'intérieur du compartiment et la pression à l'intérieur de la chambre de remplissage (11), l'élément chauffant (6) chauffe le récipient interne (2) du cuiseur électrique jusqu'à l'arrêt du cuiseur électrique. L'application de la méthode de contrôle de la présente invention permet de rendre le contrôle du cuiseur électrique pratique et automatique de sorte à réduire efficacement l'indice glycémique (IG) du riz et à améliorer la texture en bouche du riz.

## Description

La présente invention concerne le domaine des technologies de cuisson; elle concerne concrètement une méthode de contrôle de cuiseur électrique.

Dans les cuiseurs électriques actuels équipés d'un récipient interne, on place un panier à vapeur à l'intérieur du récipient interne, le riz est disposé dans le panier à vapeur et l'eau est disposée dans le récipient interne; la méthode de contrôle actuelle des cuiseurs à riz consiste à employer le chauffage de l'eau se trouvant dans le récipient interne pour la porter à ébullition, laquelle ébullition de l'eau entraîne le contact de l'eau et du riz se trouvant dans le panier à vapeur et ainsi l'absorption de l'eau par le riz; ensuite seulement le riz est cuit à la vapeur de manière à obtenir un riz à indice glycémique (IG) bas.

Cependant, les méthodes actuelles de contrôle de cuiseurs à riz ne permettent pas de garantir qu'une quantité suffisante d'eau entre dans le panier à vapeur, ce qui conduit à l'impossibilité pour une partie du riz d'entrer en contact avec l'eau et donc à l'impossibilité de procéder efficacement au rinçage du riz et à l'absorption de l'eau par le riz, ce qui affecte en définitive la texture en bouche du riz obtenu; en outre, les méthodes actuelles de contrôle de cuiseurs à riz ne permettent pas non plus de garantir la bonne réalisation du processus de séparation de l'eau et du riz, l'eau n'emportant par rinçage le sucre contenu dans le riz qu'en faible quantité, ce qui rend difficile l'obtention d'un riz à indice glycémique (IG) bas.

L'objectif de la présente invention est de proposer une méthode de contrôle de cuiseur électrique qui permette de réduire efficacement l'indice glycémique (IG) du riz, d'améliorer la texture en bouche du riz et de rendre l'usage du cuiseur à riz automatique, rapide et pratique grâce à un contrôle efficace.

Pour réaliser l'objectif susmentionné, la présente invention propose une méthode de contrôle de cuiseur électrique, caractérisée en ce que le cuiseur électrique comporte un récipient interne, un élément chauffant et, installé à l'intérieur dudit récipient interne, un panier à vapeur; ledit élément chauffant chauffe ledit récipient interne; la partie inférieure dudit panier à vapeur comporte un mécanisme d'ouverture orienté vers la paroi de fond et/ou situé dans le prolongement de la paroi latérale du récipient interne; ledit panier à vapeur comprend une zone perméable et une chambre de remplissage située au-dessus de cette zone perméable; l'espace d'ouverture entouré par le mécanisme d'ouverture est relié à la chambre de remplissage par l'entremise de ladite zone perméable; la partie supérieure dudit panier à vapeur est reliée à l'ouverture du récipient interne; la méthode de contrôle dudit cuiseur électrique comprend:
- une étape de chauffage pendant laquelle, l'élément chauffant du cuiseur électrique chauffe le récipient interne, jusqu'à atteindre une température programmée, suivi
- une étape simultanée de rinçage et de cuisson à l'eau du riz, dans laquelle dans un premier temps l'activation de l'élément de régulation de la pression du cuiseur électrique maintient la pression à l'intérieur d'un compartiment formé par l'intervalle situé entre la surface externe du panier à vapeur et la paroi interne du récipient interne à une valeur supérieure à la pression à l'intérieur de la chambre de remplissage et ceci pendant la première durée programmée, puis dans un deuxième temps l'élément de régulation de la pression maintient égales les valeurs de pression à l'intérieur du compartiment et à l'intérieur de la chambre de remplissage, ceci pendant la seconde durée programmée; l'étape de rinçage et cuisson à l'eau du riz est répétée N1 fois
- une étape de cuisson à la vapeur du riz dans laquelle le fonctionnement de l'élément de régulation de la pression maintient la pression à l'intérieur du compartiment à une valeur égale à la pression à l'intérieur de la chambre de remplissage.

Selon une autre variante, lors de l'étape simultanée de rinçage et cuisson à l'eau du riz, l'activation de l'élément de régulation de la pression augmente la pression à l'intérieur du compartiment jusqu'à atteindre une première valeur de pression programmée P1 ou réduit la pression à l'intérieur de la chambre de remplissage jusqu'à atteindre une seconde valeur de pression programmée P2.

Selon une autre variante, la première valeur de pression programmée P1 est supérieure ou égale à 5 Pa et inférieure ou égale à 2000 Pa, et la seconde valeur de pression programmée P2 est supérieure ou égale à -5000 Pa et inférieure ou égale à -5 Pa.

Selon une autre variante, la première durée programmée est supérieure ou égale à 3 secondes et inférieure ou égale à 120 secondes, et la seconde durée programmée est supérieure ou égale à 3 secondes et inférieure ou égale à 120 secondes, et N1 est supérieur ou égal à 1 et inférieur ou égal à 100.

Selon une autre variante, la température programmée est supérieure ou égale à 30°C et inférieure ou égale à 95°C, et la première durée programmée est supérieure ou égale à 120 secondes et inférieure ou égale à 1200 secondes.

Selon une autre variante, la température programmée est supérieure ou égale à 60°C et inférieure ou égale à 80°C, et la première durée programmée est supérieure ou égale à 600 secondes et inférieure ou égale à 900 secondes.

Selon une autre variante, lors de l'étape de cuisson à la vapeur du riz, l'élément chauffant chauffe de manière continue le récipient interne, pendant une troisième durée programmée t3.

Selon une autre variante, la troisième durée programmée t3 est supérieure ou égale à 1 seconde et inférieure ou égale à 1800 secondes.

Selon une autre variante, lors de l'étape de cuisson du riz à la vapeur, et dans une première phase, l'élément chauffant chauffe de manière continue le récipient interne, pendant une quatrième durée programmée t4, puis dans une deuxième phase l'élément chauffant cesse de fonctionner pendant une cinquième durée programmée t5, les première et deuxième phases sont répétées N2 fois avant l'arrêt du cuiseur électrique.

Selon une autre variante, la quatrième durée programmée t4 est supérieure ou égale à 3 secondes et inférieure ou égale à 150 secondes, et la cinquième durée programmée t5 est supérieure ou égale à 3 secondes et inférieure ou égale à 150 secondes, et N2 est supérieur ou égal à 1 et inférieur ou égal à 100.

Selon une autre variante, avant l'étape de rinçage et cuisson à l'eau du riz, le rapport entre le poids du riz se trouvant dans la chambre de remplissage et le poids de l'eau se trouvant dans le récipient interne est supérieur ou égal à 0,1 et inférieur ou égal à 3.

Selon une autre variante, avant l'étape de rinçage et cuisson à l'eau du riz, le rapport entre le poids du riz se trouvant dans la chambre de remplissage et le poids de l'eau se trouvant dans le récipient interne est supérieur ou égal à 0,3 et inférieur ou égal à 1,2.

Lors de l'application du projet de la présente invention, après l'activation du cuiseur électrique, l'élément chauffant du cuiseur électrique chauffe le récipient interne, le cuiseur électrique entre dans le processus de rinçage et cuisson à l'eau du riz; lors du processus de rinçage et cuisson à l'eau du riz, l'élément de régulation de la pression du cuiseur électrique fait en sorte que la pression à l'intérieur du compartiment formé par l'intervalle situé entre la surface externe du panier à vapeur et la paroi interne du récipient interne soit supérieure à la pression à l'intérieur de la chambre de remplissage et ceci pendant la première durée programmée, puis le fonctionnement continu de l'élément de régulation de la pression rend égales les valeurs de pression à l'intérieur du compartiment et à l'intérieur de la chambre de remplissage, ceci pendant la seconde durée programmée t2 ; afin de terminer le processus de rinçage et cuisson à l'eau du riz, le processus de rinçage et cuisson à l'eau du riz est répété N1 fois; le cuiseur électrique entre alors dans le processus de cuisson à la vapeur, le fonctionnement de l'élément de régulation de la pression équilibre la pression à l'intérieur du compartiment et la pression à l'intérieur de la chambre de remplissage, l'élément chauffant chauffe le récipient interne du cuiseur électrique jusqu'à l'arrêt du cuiseur électrique.

De cette manière, la régulation de la pression à l'intérieur du compartiment ou à l'intérieur de la chambre de remplissage grâce à l'élément de régulation de la pression permet de faire en sorte que l'eau à l'intérieur du compartiment entre dans ou sorte de la chambre de remplissage et que l'eau entre en contact avec ou soit séparée du riz; l'usage de l'élément de régulation de la pression permet encore de contrôler efficacement le nombre de contacts de l'eau et du riz ainsi que le temps de rétention de l'eau à l'intérieur de la chambre de remplissage, et l'élément chauffant permet de contrôler la température de l'eau, ce qui permet de réaliser le processus de cuisson à la vapeur à la suite du processus de rinçage et cuisson à l'eau du riz se trouvant dans le cuiseur électrique, et d'obtenir un riz à indice glycémique (IG) bas plus nutritif ainsi que de relever le niveau de satisfaction de l'utilisateur envers le processus de cuisson. C'est pourquoi, la méthode de contrôle de la présente invention rend possible le contrôle efficace d'un cuiseur électrique multifonction, largement automatisé et hautement pratique.

Les figures annexes qui constituent une partie intégrante de la présente demande sont destinées à améliorer la compréhension de la présente invention, les exemples d'applications schématiques de la présente invention et leurs explications sont destinés à expliquer la présente invention, sans pour autant constituer de restriction inappropriée de la présente invention. Dans les figures annexes :
La figure 1 est le diagramme des principes de contrôle du cuiseur électrique selon la présente invention.
La figure 2 est le schéma structurel d'un cuiseur à riz selon un exemple d'application possible de la présente invention.
La figure 3 est le schéma tridimensionnel du récipient interne et du panier à vapeur du cuiseur à riz de la figure 2.
La figure 4 est un agrandissement de la zone A de la figure 3.
La figure 5 est le schéma structurel d'un cuiseur à riz selon un autre exemple d'application possible de la présente invention.

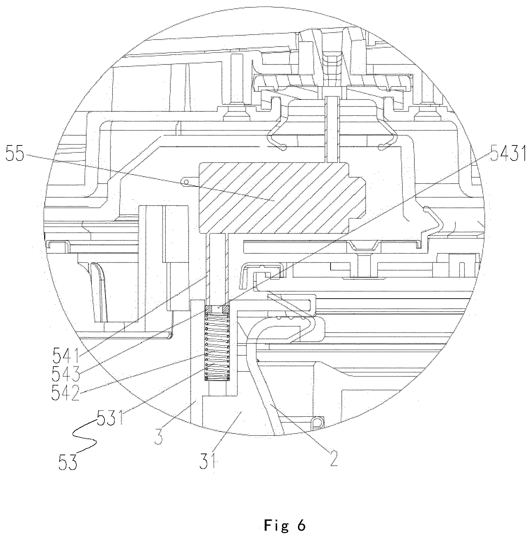

La figure 6 est un agrandissement de la zone B de la figure 5.
La figure 7 est le diagramme des principes de contrôle du cuiseur à riz de la figure 5.
La figure 8 est le schéma structurel d'un cuiseur à riz selon un autre exemple d'application possible de la présente invention.
La figure 9 est le diagramme des principes de contrôle du cuiseur à riz de la figure 8.

Il faut préciser qu'en l'absence d'incompatibilité, les exemples d'applications de la présente demande et les caractéristiques de ces exemples d'applications peuvent être mutuellement combinés. On va ci-dessous expliquer de manière concise la présente invention au moyen des dessins annexes de référence combinés à des exemples d'applications.

Il faut noter que les explications détaillées ci-dessous sont toutes fournies à titre d'exemples dans le but de fournir une explication plus poussée de la présente invention. Sauf mention contraire, tous les termes techniques et scientifiques employés ici ont l'acception courante telle qu'admise par le personnel technique ordinaire du domaine technique duquel relève la présente demande.

Dans la présente invention, en l'absence d'indication inverse, les termes de direction tels que "au-dessus, au-dessous, en haut de, en bas de" renvoient généralement aux orientations indiquées sur les dessins annexes, ou bien renvoient aux directions verticales, perpendiculaires ou de la gravité des pièces elles-mêmes; de même, afin de faciliter la compréhension et la description, "à l'intérieur de" et "à l'extérieur de" renvoient à l'intérieur ou l'extérieur de la silhouette de la pièce en question, toutefois, les termes de direction susmentionnés ne constituent en rien une limitation de la présente invention.

La présente invention propose une méthode de contrôle de cuiseur électrique destinée à réaliser le contrôle efficace des cuiseurs électriques de manière à réduire efficacement l'indice glycémique (IG) du riz, à améliorer la texture en bouche du riz et à rendre l'usage du cuiseur à riz automatique, rapide et pratique. Par méthode de contrôle de cuiseur électrique, on comprend un procédé de commande d'un cuiseur électrique.

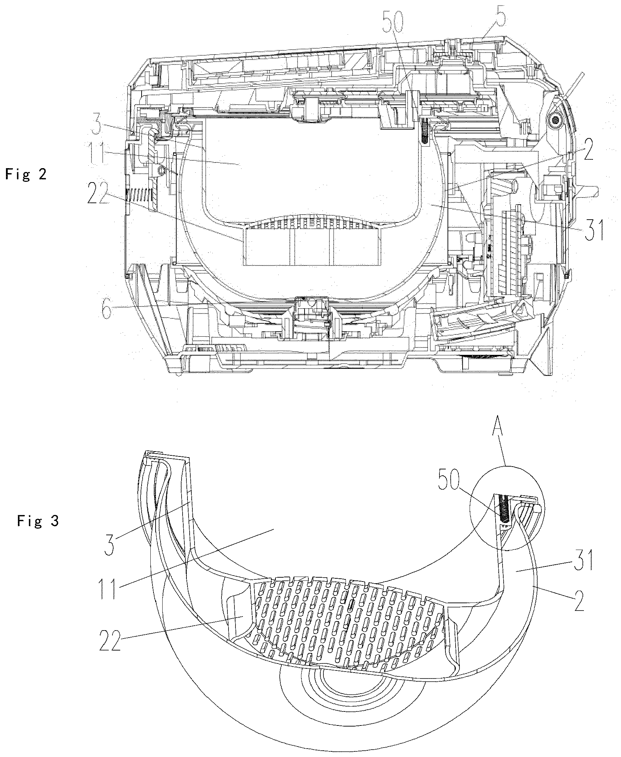

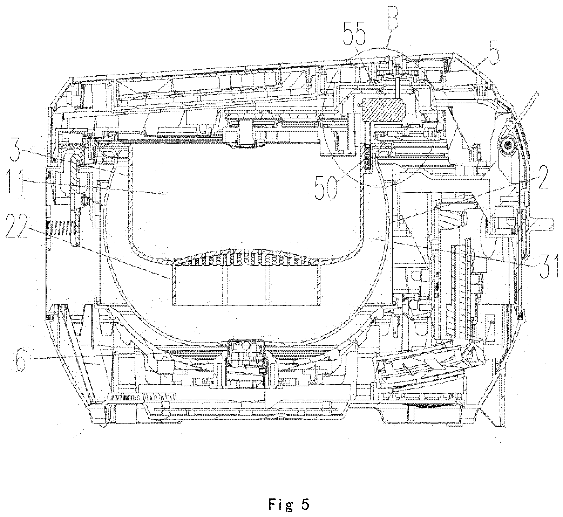

Un cuiseur électrique étant un cuiseur à riz tel que représenté sur les figures 2, 5 et 8, qui comporte un récipient interne (2), un élément chauffant (6) et, installé à l'intérieur dudit récipient interne (2), un panier à vapeur (3) ; sous le panier à vapeur (3) se trouve un mécanisme d'ouverture (22) qui fait face au fond du récipient interne et/ou qui prolonge la paroi externe du récipient interne (2) ; le panier à vapeur (3) comprend une zone perméable et une chambre de remplissage (11) située au-dessus de cette zone perméable; l'espace d'ouverture entouré par le mécanisme d'ouverture (22) est relié à la chambre de remplissage par l'entremise de ladite zone perméable ; la partie supérieure du panier à vapeur (3) est reliée à l'ouverture du récipient interne (2) de manière à ce que l'intervalle situé entre la surface extérieure du panier à vapeur (3) et la paroi interne du récipient interne (2) forme un compartiment (31) étanche.

Bien entendu, le cuiseur électrique de la présente invention peut également être un four micro-onde, un fait-tout électrique ou un cuiseur électrique sous pression.

L'élément chauffant (6) peut être une plaque chauffante, un tube chauffant, un dispositif chauffant électronique à induction ou un dispositif de chauffage à fil chauffant.

Il est à préciser, avant d'utiliser le cuiseur électrique de la présente invention, qu'il faut commencer par placer le riz à l'intérieur de la chambre de remplissage (11) du panier à vapeur (3) et ajouter de l'eau dans le récipient interne (2).

Le rapport entre le poids G1 du riz se trouvant dans la chambre de remplissage (11) et le poids G2 de l'eau se trouvant dans le récipient interne (2) est supérieur ou égal à 0,1 et inférieur ou égal à 3.

Avec de préférence, le rapport entre le poids G1 du riz se trouvant dans la chambre de remplissage (11) et le poids G2 de l'eau se trouvant dans le récipient interne (2) est supérieur ou égal à 0,3 et inférieur ou égal à 1,2.

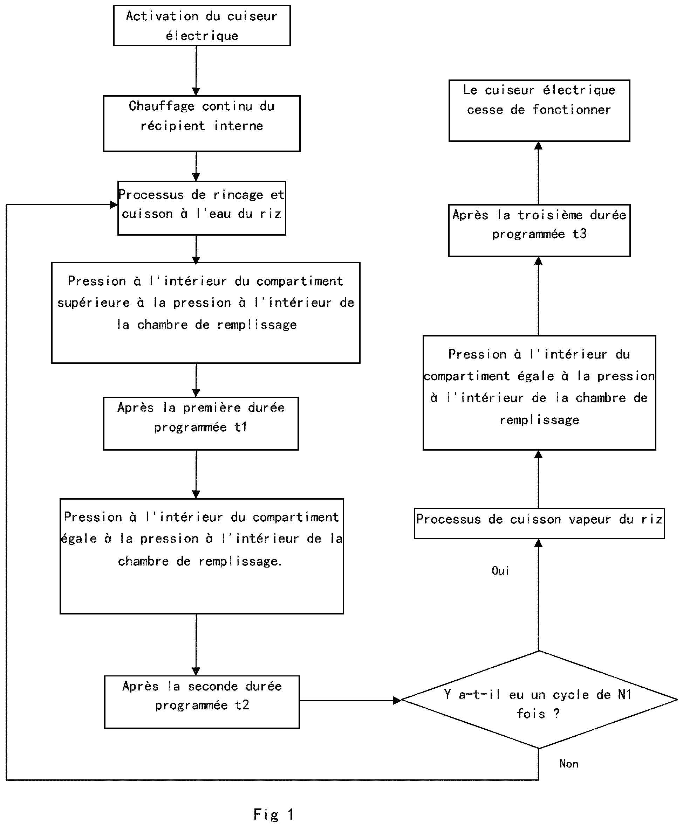

Comme le montre le diagramme des principes de contrôle du cuiseur électrique de la présente invention sur la figure 1, la méthode de contrôle du cuiseur électrique est la suivante : après activation du cuiseur électrique, l'élément chauffant (6) chauffe le récipient interne (2), le cuiseur électrique entre ainsi dans un processus ou une étape de rinçage et cuisson à l'eau du riz. Selon l'invention, le rinçage et la cuisson du riz se déroule simultanément lors de cette étape. Lors du processus de rinçage et cuisson à l'eau du riz, l'activation d'un élément de régulation de la pression (50) du cuiseur électrique fait en sorte que la pression à l'intérieur du compartiment (31) soit supérieure à la pression à l'intérieur de la chambre de remplissage (11) et ceci pendant la première durée programmée t1, puis le fonctionnement continu de l'élément de régulation de la pression (50) rend égales les valeurs de pression à l'intérieur du compartiment (31) et à l'intérieur de la chambre de remplissage (11), ceci pendant la seconde durée programmée t2. Afin de terminer le processus de rinçage et cuisson à l'eau du riz, le processus de rinçage et cuisson à l'eau du riz est répété N1 fois. Le rinçage du riz permet de réduire efficacement la teneur en sucre du riz et d'obtenir ainsi un riz à indice glycémique (IG) bas.

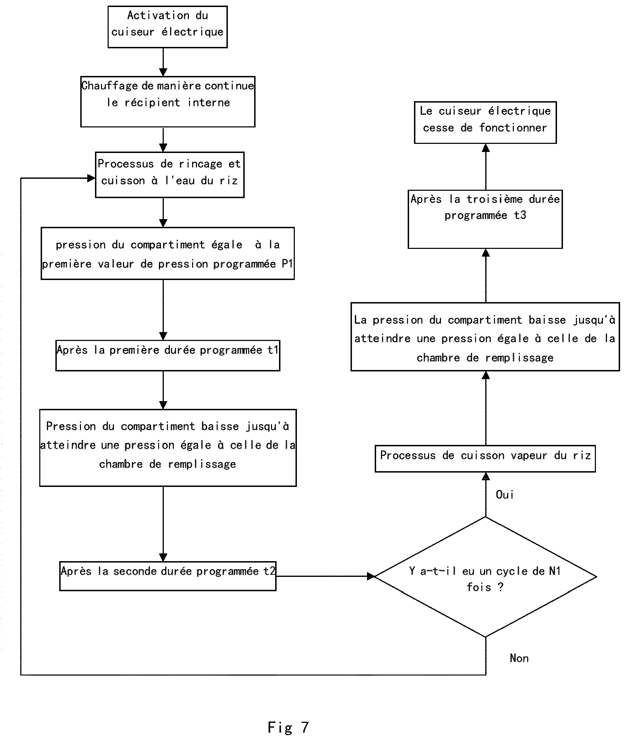

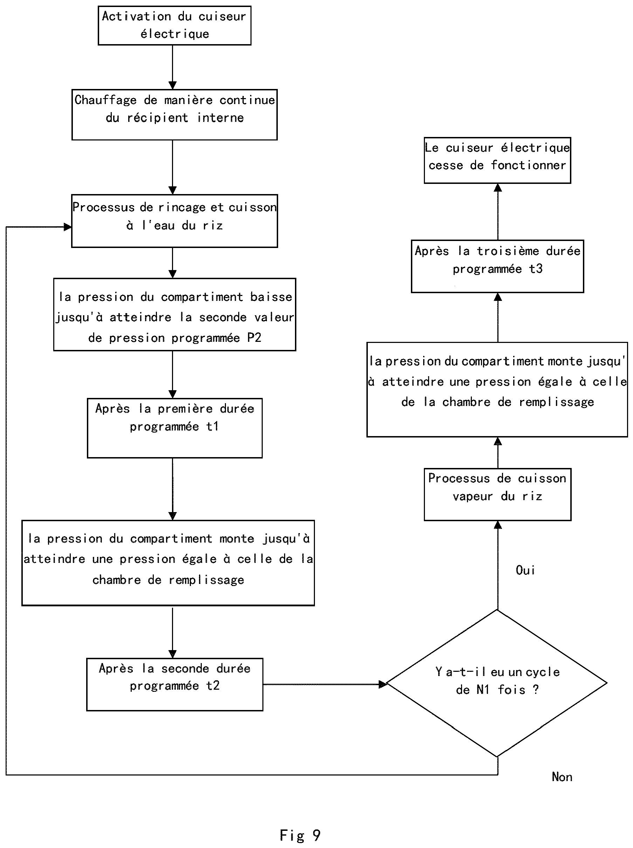

Les figures 7 et 9 montrent deux exemples d'applications différents. Lors du processus de rinçage et cuisson à l'eau du riz, l'activation de l'élément de régulation de la pression (50) fait en sorte que la pression à l'intérieur du compartiment (31) s'élève jusqu'à atteindre la première valeur de pression programmée P1 ou bien fait en sorte que la pression à l'intérieur de la chambre de remplissage (11) baisse jusqu'à atteindre la seconde valeur de pression programmée P2. Que la pression soit augmentée dans le compartiment (31) ou réduite dans la chambre de remplissage (11), ces actions visent à faire en sorte que la pression du compartiment (31) soit supérieure à celle de la chambre de remplissage (11), de manière que l'eau se trouvant dans le compartiment (31) puisse passer par le mécanisme d'ouverture (22) pour pénétrer dans la chambre de remplissage (11) et entrer en contact avec le riz.

De cette manière, la régulation de la pression à l'intérieur du compartiment (31) ou à l'intérieur de la chambre de remplissage (11) grâce à l'élément de régulation de la pression (50) permet de faire en sorte que l'eau à l'intérieur du compartiment (31) entre dans ou sorte de la chambre de remplissage (11) et que l'eau entre en contact avec ou soit séparée du riz; l'usage de l'élément de régulation de la pression (50) permet encore de contrôler efficacement le nombre de contacts de l'eau et du riz ainsi que le temps de rétention de l'eau à l'intérieur de la chambre de remplissage, et l'élément chauffant (6) permet de contrôler la température de l'eau, ce qui permet de réaliser le processus de cuisson à la vapeur à la suite du processus de rinçage et cuisson à l'eau du riz se trouvant dans le cuiseur électrique, d'obtenir un riz à indice glycémique (IG) bas plus nutritif ainsi que de relever le niveau de satisfaction de l'utilisateur envers le processus de cuisson. C'est pourquoi, la méthode de contrôle de la présente invention rend possible le contrôle efficace d'un cuiseur électrique multifonction, largement automatisé et hautement pratique.

La première valeur de pression programmée P1 est supérieure ou égale à 5 Pa (pression absolue) et inférieure ou égale 2000 Pa (pression absolue), et la seconde valeur de pression programmée P2 est supérieure ou égale à -5000 Pa (pression absolue) et inférieure ou égale à -5 Pa (pression absolue). On peut de cette manière garantir le contact complet entre l'eau et le riz.

Lors du processus de rinçage et cuisson à l'eau du riz, la première durée programmée t1 est supérieure ou égale à 3 secondes et inférieure ou égale à 120 secondes, et la seconde durée programmée t2 est supérieure ou égale à 3 secondes et inférieure ou égale à 120 secondes, et N1 est supérieur ou égal à 1 et inférieur ou égal à 100.

Dans un exemple d'application, lors du processus de rinçage et cuisson à l'eau du riz, la première durée programmée t1 est de 30 secondes, la seconde durée programmée t2 est de 8 secondes, et N1 est égal à 4. Ce processus de rinçage et cuisson à l'eau du riz est extrêmement régulier, à chaque fois la même durée de chauffage et la même durée d'arrêt du chauffage sont utilisées pour mener à bien le travail de cuisson.

Il faut préciser qu'étant donné que la température du riz qui n'est pas en contact avec de l'eau bouillante est relativement basse, lors du premier contact de l'eau bouillante avec le riz, la température de l'eau baisse rapidement et le niveau d'eau qui a monté baisse aussi rapidement.

Il faut préciser en complément qu'après l'activation du cuiseur électrique de la présente invention, l'élément chauffant (6) se trouve dans la première position de fonctionnement de manière à chauffer et porter à ébullition l'eau se trouvant dans le récipient interne (2) ; une fois portée à ébullition, l'eau se trouvant dans le récipient interne (2) est envoyée sous l'action de la pression à travers le mécanisme d'ouverture (22) jusque dans la chambre de remplissage (11) pour entrer en contact avec le riz; une fois que le riz a été immergé dans l'eau, l'élément chauffant (6) repasse dans la seconde position de chauffage, avec la puissance de l'élément chauffant (6) dans la première position de fonctionnement supérieure à la puissance de l'élément chauffant (6) dans la seconde position de fonctionnement. On arrive ainsi à garantir que l'eau ne déborde pas suite à une ébullition excessive; l'eau bouillante cuit de manière continue le riz, ce qui permet de raccourcir le temps de cuisson total du riz.

Dans un autre exemple d'application, N1 égale 1, lors du processus de rinçage et cuisson à l'eau du riz, après que le fonctionnement de l'élément chauffant (6) a porté la température de l'eau à l'intérieur du récipient interne (2) jusqu'à la température programmée, l'élément de régulation de la pression (50) du cuiseur électrique est activé, puis, la pression du compartiment (31) croît, l'eau se trouvant dans le récipient interne (2) est envoyée à travers le mécanisme d'ouverture (22) jusque dans la chambre de remplissage (11), ce qui permet de maintenir le contact entre l'eau et le riz de façon à réaliser l'immersion du riz; et une fois que le riz a correctement absorbé l'eau, l'eau se trouvant à l'intérieur de la chambre de remplissage (11) reflue hors de la chambre de remplissage (11) à travers le mécanisme d'ouverture (22) jusque dans le récipient interne (2) ; ainsi le cuiseur électrique a terminé le processus de rinçage et cuisson à l'eau du riz, et entre directement dans le processus de cuisson à la vapeur du riz. De cette manière, l'élément chauffant (6) sera activé de préférence avant l'élément de régulation de la pression (50) ; on peut choisir de procéder au chauffage de l'eau afin de garantir que lorsque l'eau et le riz sont en contact, l'eau ait une certaine température favorable au rinçage et à la cuisson à l'eau simultanée du riz, et dans un même temps afin de garantir que l'eau et le riz soient entièrement en contact, et que le riz trempe entièrement dans l'eau et absorbe correctement l'eau.

Dans un autre exemple d'application, N1 égale 1, lors du processus de rinçage et cuisson à l'eau du riz, l'élément chauffant (6) et l'élément de régulation de la pression (50) du cuiseur électrique sont activés en même temps, puis l'élément chauffant (6) porte l'eau se trouvant dans le récipient interne (2) jusqu'à la température programmée, puis, la pression du compartiment (31) croît, l'eau se trouvant dans le récipient interne (2) est envoyée à travers le mécanisme d'ouverture (22) jusque dans la chambre de remplissage (11), ce qui permet de maintenir le contact entre l'eau et le riz de façon à réaliser l'immersion du riz; et une fois que le riz a correctement absorbé l'eau, l'eau se trouvant à l'intérieur de la chambre de remplissage (11) reflue hors de la chambre de remplissage (11) à travers le mécanisme d'ouverture (22) jusque dans le récipient interne (2) ; ainsi le cuiseur électrique a terminé le processus de rinçage et cuisson à l'eau du riz, et entre directement dans le processus de cuisson à la vapeur du riz. Etant donné qu'un certain temps est nécessaire pour que l'élément chauffant (6) porte la température de l'eau jusqu'à la température programmée, après que l'élément de régulation de la pression (50) a été activé, l'eau sera directement aspirée dans la chambre de remplissage (11), de sorte que l'eau entre en contact avec le riz avant d'avoir été chauffée, et immerge le riz, ce qui est favorable à une bonne absorption de l'eau par le riz; ensuite, après que l'eau a été portée à ébullition, la cuisson à l'eau du riz commence.

Dans l'exemple d'application ci-dessus, lors du processus de rinçage et cuisson à l'eau du riz, la température programmée est supérieure ou égale à 30°C et inférieure ou égale à 95°C, et la première durée programmée t1 est supérieure ou égale à 120 secondes et inférieure ou égale à 1200 secondes.

De plus, lors du processus de rinçage et cuisson à l'eau du riz, la température programmée est supérieure ou égale à 60°C et inférieure ou égale à 80°C, et la première durée programmée t1 est supérieure ou égale à 600 secondes et inférieure ou égale à 900 secondes. La pratique montre que le fonctionnement de l'élément chauffant (6) et de l'élément de régulation de la pression (50) de la manière susmentionnée permet d'améliorer la texture en bouche du riz cuit.

Dans un autre exemple d'application, N1 est supérieur à 1, lors du premier processus de rinçage et cuisson à l'eau du riz, l'élément de régulation de la pression (50) du cuiseur électrique est activé, puis, l'eau se trouvant dans le récipient interne (2) est envoyée à travers le mécanisme d'ouverture (22) jusque dans la chambre de remplissage (11), ce qui permet de maintenir le contact entre l'eau et le riz de façon à réaliser le rinçage et l'absorption d'eau par le riz; ensuite l'eau se trouvant à l'intérieur de la chambre de remplissage (11) reflue hors de la chambre de remplissage à travers le mécanisme d'ouverture (22) jusque dans le récipient interne (2) ; et, lors des processus de rinçage et cuisson à l'eau du riz de la seconde fois jusqu'à la N1 fois, l'eau se trouvant dans le récipient interne (2) entre dans et sort de la chambre de remplissage (11) à plusieurs reprises, et lorsque la N1 fois du processus de rinçage et cuisson à l'eau du riz est terminée, le cuiseur électrique entre directement dans le processus de cuisson à la vapeur du riz. De cette manière, après que l'eau est montée dans la chambre de remplissage (11) et est entrée en contact avec le riz, et qu'elle est redescendue hors de la chambre de remplissage (11) et a été séparée du riz, l'eau monte et descend à plusieurs reprises afin de réaliser le processus de rinçage du riz se trouvant à l'intérieur de la chambre de remplissage (11), ce qui permet de garantir que l'eau lave et emporte efficacement le sucre contenu dans le riz.

Bien entendu, lors du processus de rinçage et cuisson à l'eau du riz, l'élément de régulation de la pression (50) ne fonctionne pas forcément de façon régulière, autrement dit, il varie en fonction de l'avancement de la cuisson, en ajustant la première durée programmée t1 et la seconde durée programmée t2 de chaque cycle.

Le Tableau 1 ci-dessous présente concrètement la méthode de contrôle du processus de rinçage et cuisson à l'eau du riz par le cuiseur électrique.

**Méthode de contrôle du processus de rinçage et cuisson à l'eau du riz par le cuiseur électrique**

| | Processus de rinçage et cuisson à l'eau du riz | | | | | |
|---|---|---|---|---|---|---|
| Nombre de fois | Absorption de l'eau préalable | | Absorption rapide de l'eau | | Absorption finale de l'eau | |
| | Phase de cuisson à l'eau du riz | | Phase de cuisson à l'eau du riz | | Phase de cuisson à l'eau du riz | |
| | t11 (secondes) | t21 (secondes) | t12 (secondes) | t22 (secondes) | t13 (secondes) | t23 (secondes) |
| 1 | 112 | 120 | 62 | 36 | 35 | 12 |
| 2 | 120 | 95 | 42 | 28 | 19 | 10 |
| 3 | 92 | 78 | 50 | 25 | 15 | 6 |
| 4 | 87 | 75 | 30 | 21 | 3 | 3 |

Une fois le processus de rinçage et cuisson à l'eau du riz terminé, le cuiseur électrique entre dans le processus de cuisson à la vapeur du riz. A ce moment là, le fonctionnement de l'élément de régulation de la pression (50) fait en sorte que la pression à l'intérieur du compartiment (31) soit supérieure à la pression à l'intérieur de la chambre de remplissage (11), ceci jusqu'à l'arrêt du cuiseur électrique.

Dans un exemple d'application, lors du processus de cuisson à la vapeur du riz, l'élément chauffant (6) chauffe de manière continue le récipient interne (2), et, après que la troisième durée programmée t3 est terminée, le cuiseur électrique cesse de fonctionner. On a ainsi une méthode de contrôle assez simple.

Au cours du processus de cuisson à la vapeur du riz, la troisième durée programmée t3 est supérieure ou égale à 1 seconde et inférieure ou égale à 1800 secondes.

Avec de préférence la troisième durée programmée t3 étant égale à 720 secondes.

Dans un autre exemple d'application, lors du processus de cuisson du riz à la vapeur en une seule fois, l'élément chauffant (6) chauffe de manière continue le récipient interne (2), et, après que la quatrième durée programmée t4 est terminée, l'élément chauffant (6) cesse de fonctionner, ceci pendant une cinquième durée programmée t5, afin de terminer le processus de cuisson à la vapeur du riz, lequel processus de cuisson à la vapeur du riz est répété N2 fois avant l'arrêt du cuiseur électrique. Il faut préciser que, après le processus de rinçage et cuisson à l'eau du riz, l'eau restant dans le récipient interne (2) peut être en trop grande quantité, alors, pour éviter que l'eau se trouvant dans le récipient interne (2) n'entre dans le mécanisme d'ouverture (22) et n'entraîne un déséquilibre de pression entre le compartiment (31) et la chambre de remplissage (11), il faudra contrôler le dispositif marche-arrêt de l'élément chauffant (6) pour s'assurer que l'eau n'entre pas dans le mécanisme d'ouverture (22) et que le compartiment (31) et la chambre de remplissage (11) restent reliés du début à la fin du processus. De cette manière on garantit à la fois l'efficacité du chauffage du cuiseur électrique durant le processus de cuisson à la vapeur du riz, et que l'eau n'entrera pas en contact avec le riz durant ce processus, ceci permet d'améliorer la fiabilité de tout le déroulement du processus de cuisson à la vapeur du riz.

Lors du processus de cuisson à la vapeur du riz, la quatrième durée programmée t4 est supérieure ou égale à 3 secondes et inférieure ou égale à 150 secondes, et la cinquième durée programmée t5 est supérieure ou égale à 3 secondes et inférieure ou égale à 150 secondes, et N2 est supérieur ou égal à 1 et inférieur ou égal à 100.

Bien entendu, lors du processus de cuisson à la vapeur du riz, la durée de marche et d'arrêt de l'élément chauffant (6) n'est pas forcément entièrement régulière. Autrement dit, la durée de chauffage ou d'arrêt de l'élément chauffant (6) peut être optimisée en fonction de l'évolution de la cuisson, de sorte que la durée de chauffage et la durée d'arrêt de l'élément chauffant (6) soient pour chaque cycle différentes de celles du cycle précédent.

Le Tableau 2 ci-dessous présente concrètement la méthode de contrôle du processus de cuisson à la vapeur du riz par le cuiseur électrique.

| | Processus de cuisson à la vapeur du riz | |
|---|---|---|
| Nombre de fois | Quatrième temps programmé t4 (secondes) | Cinquième temps programmé t5 (secondes) |
| 1 | 35 | 10 |
| 2 | 3 | 8 |
| 3 | 75 | 30 |
| 4 | 68 | 35 |
| 5 | 105 | 65 |
| 6 | 115 | 58 |

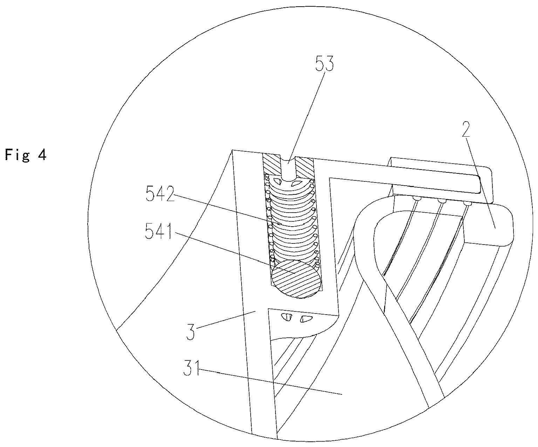

Dans les exemples d'applications des figures 2 à 4 ou 5, l'élément de régulation de la pression (50) et le compartiment (31) sont reliés; l'élément de régulation de la pression (50) passe sur la première position de fonctionnement, la pression à l'intérieur du compartiment (31) croît et est maintenue constante à la première valeur de pression programmée P1 ; l'eau se trouvant dans le récipient interne (2) est envoyée à travers le mécanisme d'ouverture (22) jusque dans la chambre de remplissage (11) pour être en contact avec le riz; l'élément de régulation de la pression (50) passe sur la seconde position de fonctionnement, la pression à l'intérieur du compartiment (31) est réduite jusqu'à être égale à la pression à l'intérieur de la chambre de remplissage (11); l'eau se trouvant dans la chambre de remplissage (11) reflue hors de la chambre de remplissage (11) à travers le mécanisme d'ouverture (22) jusque dans le récipient interne (2). De cette manière, on peut réaliser de façon stable le changement de l'élément de régulation de la pression (50) de la position de fonctionnement 1 à la position de fonctionnement 2, et ainsi réussir à contrôler la pression à l'intérieur du compartiment (31).

Dans un exemple d'application qui n'a pas été illustré dans les figures, le couvercle supérieur (5) est refermé, ce couvercle supérieur (5) comporte un orifice de libération de la pression relié à la chambre de remplissage, ainsi, après que l'eau à l'intérieur du compartiment (31) est montée jusqu'à la chambre de remplissage (11), l'air contenu dans la chambre de remplissage (11) peut être évacué efficacement.

Dans les exemples d'applications tels que décrits dans les figures 2 à 4, concrètement, l'élément de régulation de la pression (50) comporte un cylindre d'installation (53) situé sur le panier à vapeur (3), une pièce élastique (542) et une pièce d'arrêt (541) ; la pièce élastique (542) et la pièce d'arrêt (541) sont mobiles à l'intérieur du cylindre d'installation (53) ; la pièce d'arrêt (541) a une position d'ouverture proche de l'ouverture d'une extrémité du compartiment (31) destinée à ouvrir le cylindre d'installation (53) et une position d'arrêt qui ferme étroitement l'ouverture ; lorsque l'élément de régulation de la pression (50) se trouve sur la première position de fonctionnement, la pièce d'arrêt (541) est sur la position d'ouverture, le cylindre d'installation (53) et le compartiment (31) sont reliés, la pression à l'intérieur du compartiment (31) croît et est maintenue constante à la première valeur de pression programmée P1 ; lorsque l'élément de régulation de la pression (50) se trouve sur la seconde position de fonctionnement, la pièce d'arrêt (541) est sur la position d'arrêt, la pression à l'intérieur du compartiment (31) baisse jusqu'à devenir égale à la pression de la chambre de remplissage (11). De cette manière, par l'entremise du passage entre la position d'ouverture et la position d'arrêt de la pièce d'arrêt (541), on réalise aisément le passage de l'élément de régulation de la pression (50) entre la première position de fonctionnement et la seconde position de fonctionnement, la fiabilité de l'élément de régulation de la pression (50) s'en trouve ainsi améliorée.

Comme le montrent les exemples d'applications tels que décrits dans les Dessins 5 et 6, l'élément de régulation de la pression (50) comporte un cylindre d'installation (53) situé sur le panier à vapeur (3), une pièce élastique (542), une pièce d'arrêt (541), une pièce d'étanchéité (543) et une pompe de compression (55), la pièce d'arrêt (541) étant un tube creux, le cylindre d'installation (53) possédant une cavité de jonction (531), la pièce élastique (542) et la pièce d'étanchéité (543) étant installées de manière mobile à l'intérieur de la cavité de jonction (531), la pièce d'étanchéité (543) étant appuyée grâce à la pièce élastique (542) sur l'ouverture d'une des extrémités éloignées du compartiment (31), la pièce d'étanchéité (543) étant pourvue d'un orifice de passage (5431) situé dans le prolongement de l'axe longitudinal du cylindre d'installation (53) ; la pompe de compression (55) passe à travers le tube creux, l'orifice de passage (5431) pour connecter la cavité de jonction (531) et le compartiment (31) ; le tube creux a soit une position de blocage de l'orifice de passage (5431) dans laquelle il est en contact avec la pièce d'étanchéité (543) soit une position séparée d'ouverture de l'orifice de passage (5431) dans laquelle il est séparé de la pièce d'étanchéité (543) ; lorsque l'élément de régulation de la pression (50) se trouve sur la première position de fonctionnement, le tube creux est en position de blocage, la pompe de compression (55) injecte de l'air à travers le tube creux, l'orifice de passage (5431) et la cavité de jonction (531) à l'intérieur du compartiment (31) afin de faire augmenter la pression à l'intérieur du compartiment (31) et de la maintenir à la première valeur de pression programmée P1 ; lorsque l'élément de régulation de la pression (50) se trouve sur la seconde position de fonctionnement, la pression à l'intérieur du compartiment (31) baisse jusqu'à devenir égale à la pression à l'intérieur de la chambre de remplissage (11).

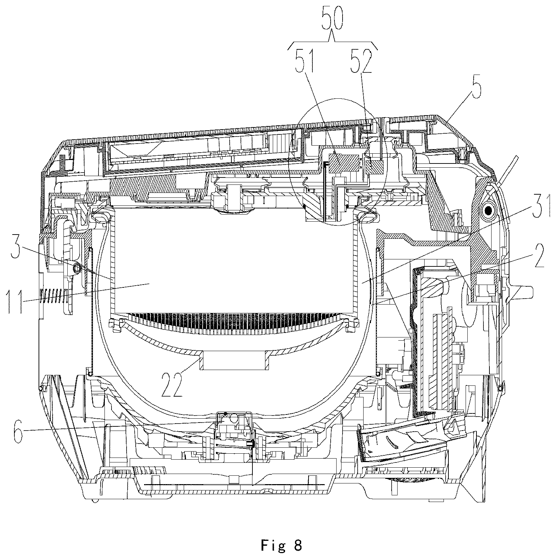

Comme le montre l'exemple d'application de la figure 8, l'élément de régulation de la pression (50) et le compartiment (31) sont reliés; l'élément de régulation de la pression (50) passe sur la première position de fonctionnement, la pression à l'intérieur de la chambre de remplissage (11) décroît et est maintenue constante à la seconde valeur de pression programmée P2 ; l'eau se trouvant dans le récipient interne (2) est envoyée à travers le mécanisme d'ouverture (22) jusque dans la chambre de remplissage (11) pour être en contact avec le riz; l'élément de régulation de la pression (50) passe sur la seconde position de fonctionnement, la pression à l'intérieur du compartiment (31) est réduite jusqu'à être égale à la pression à l'intérieur de la chambre de remplissage (11) ; l'eau se trouvant dans la chambre de remplissage (11) reflue hors de la chambre de remplissage (11) à travers le mécanisme d'ouverture (22) jusque dans le récipient interne (2). De cette manière, en faisant passer l'élément de régulation de la pression (50) entre la première et la seconde positions de fonctionnement, on parvient aisément à contrôler efficacement la pression à l'intérieur de la chambre de remplissage.

Concrètement, comme le montre la figure 8, l'élément de régulation de la pression (50) comporte un mécanisme de succion de l'air (51) et un mécanisme d'injection de l'air (52) indépendants l'un de l'autre; lorsque le mécanisme de succion de l'air (51) est activé et que le mécanisme d'injection de l'air (52) est désactivé, l'élément de régulation de la pression (50) se trouve dans la première position de fonctionnement, la pression du compartiment (31) est supérieure à la pression de la chambre de remplissage (11) ; lorsque le mécanisme de succion de l'air (51) est désactivé et que le mécanisme d'injection de l'air (52) est activé, l'élément de régulation de la pression (50) se trouve dans la seconde position de fonctionnement, la pression du compartiment (31) est égale à la pression de la chambre de remplissage (11).

L'activation du mécanisme de succion de l'air (51), le mécanisme d'injection de l'air (52) étant désactivé, fait en sorte que le mécanisme de succion de l'air (51) aspire l'air se trouvant à l'intérieur de la chambre de remplissage (11) de manière à réduire efficacement la pression de la chambre de remplissage (11), de sorte que l'eau se trouvant à l'intérieur du compartiment (31) soit comprimée et envoyée vers la chambre de remplissage (11) et entre en contact avec le riz ; la désactivation du mécanisme de succion de l'air (51) et l'activation du mécanisme d'injection de l'air (52) font en sorte que la chambre de remplissage (11) est directement reliée au compartiment (31) ou à l'espace extérieur du cuiseur électrique, de sorte que la pression du compartiment (31) est égale à la pression de la chambre de remplissage (11), et que le niveau de l'eau se trouvant à l'intérieur de la chambre de remplissage (11) baisse et reflue hors de la chambre de remplissage (11) pour revenir dans le compartiment (31).

Il faut préciser que dans l'exemple d'application tel que décrit dans la figure 8, après avoir refermé le couvercle supérieur (5), le couvercle supérieur (5) et la chambre de remplissage (11) sont joints de manière étanche. Le bord supérieur du panier à vapeur (3) et/ou le récipient interne (2) est pourvu d'un orifice de passage (pas d'image disponible) ; le couvercle supérieur (5) est pourvu d'un canal de jonction qui relie l'orifice de passage et l'espace extérieur du cuiseur électrique. De cette manière, on garantit que le compartiment (31) et l'espace extérieur du cuiseur électrique sont reliés de sorte que l'air situé à l'extérieur du cuiseur électrique pénètre efficacement à l'intérieur du compartiment (31), ceci pour fournir une pression atmosphérique stable à l'eau se trouvant à l'intérieur du compartiment (31) et garantir que cette eau se trouvant à l'intérieur du compartiment (31) puisse aisément entrer dans la chambre de remplissage (11).

Le mécanisme de succion de l'air (51) peut être une pompe à vide ou une pompe à dépression.

Le mécanisme d'injection de l'air (52) peut être un circuit d'injection d'air pourvu d'une soupape ou d'un régulateur.

Il faut noter que les termes techniques employés ici sont uniquement destinés à décrire des modes d'application concrets, et non à limiter les modes d'application fournis à titre d'exemples selon la présente demande. Les termes tels qu'utilisés ici, sauf mention contraire du contexte, lorsqu'ils sont au singulier incluent également le pluriel, de plus, il faut aussi comprendre que l'usage dans la présente description des termes "comporter" et/ou "inclure" implique qu'il existe des caractéristiques, étapes, tâches, composants, pièces et/ou des éléments les constituant.

Il faut préciser que les termes techniques "premier(ère)" et "second(e)" employés dans la description, les revendications, et les dessins annexes de la présente demande servent à distinguer des phénomènes semblables et non à décrire une séquence spécifique ou un ordre d'antériorité-postériorité. Il faut comprendre que les données utilisées ainsi peuvent dans des conditions appropriées être interchangées.

Les exemples mentionnés plus haut constituent uniquement des exemples d'applications préférables de la présente invention, ils ne constituent en rien une restriction à la présente invention.

## Revendications

1. Méthode de contrôle de cuiseur électrique, **caractérisée en ce que** le cuiseur électrique comporte un récipient interne (2), un élément chauffant (6) et, installé à l'intérieur dudit récipient interne (2), un panier à vapeur (3) ; ledit élément chauffant (6) chauffe ledit récipient interne (2) ; la partie inférieure dudit panier à vapeur (3) comporte un mécanisme d'ouverture (22) orienté vers la paroi de fond et/ou situé dans le prolongement de la paroi latérale du récipient interne (2) ; ledit panier à vapeur (3) comprend une zone perméable et une chambre de remplissage (11) située au-dessus de cette zone perméable; l'espace d'ouverture entouré par le mécanisme d'ouverture (22) est relié à la chambre de remplissage (11) par l'entremise de ladite zone perméable; la partie supérieure dudit panier à vapeur (3) est reliée à l'ouverture du récipient interne (2) ; la méthode de contrôle dudit cuiseur électrique comprend:
- une étape de chauffage pendant laquelle, l'élément chauffant (6) du cuiseur électrique chauffe le récipient interne (2), jusqu'à atteindre une température programmée, suivi
- une étape simultanée de rinçage et de cuisson à l'eau du riz, dans laquelle dans un premier temps l'activation de l'élément de régulation de la pression (50) du cuiseur électrique maintient la pression à l'intérieur d'un compartiment (31) formé par l'intervalle situé entre la surface externe du panier à vapeur (3) et la paroi interne du récipient interne (2) à une valeur supérieure à la pression à l'intérieur de la chambre de remplissage (11) et ceci pendant la première durée programmée t1, puis dans un deuxième temps l'élément de régulation de la pression (50) maintient égales les valeurs de pression à l'intérieur du compartiment (31) et à l'intérieur de la chambre de remplissage (11), ceci pendant la seconde durée programmée t2 ; l'étape de rinçage et cuisson à l'eau du riz est répétée N1 fois
- une étape de cuisson à la vapeur du riz dans laquelle le fonctionnement de l'élément de régulation de la pression (50) maintient la pression à l'intérieur du compartiment (31) à une valeur égale à la pression à l'intérieur de la chambre de remplissage (11).

2. Méthode de contrôle de cuiseur électrique selon la revendication 1, **caractérisée en ce que**, lors de l'étape simultanée de rinçage et cuisson à l'eau du riz, l'activation de l'élément de régulation de la pression (50) augmente la pression à l'intérieur du compartiment (31) jusqu'à atteindre une première valeur de pression programmée P1 ou réduit la pression à l'intérieur de la chambre de remplissage (11) jusqu'à atteindre une seconde valeur de pression programmée P2.

3. Méthode de contrôle de cuiseur électrique selon la revendication 2, **caractérisée en ce que** la première valeur de pression programmée P1 est supérieure ou égale à 5 Pa et inférieure ou égale à 2000 Pa, et la seconde valeur de pression programmée P2 est supérieure ou égale à -5000 Pa et inférieure ou égale à -5 Pa.

4. Méthode de contrôle de cuiseur électrique selon l'une des revendications précédentes, **caractérisée en ce que** la première durée programmée t1 est supérieure ou égale à 3 secondes et inférieure ou égale à 120 secondes, et la seconde durée programmée t2 est supérieure ou égale à 3 secondes et inférieure ou égale à 120 secondes, et N1 est supérieur ou égal à 1 et inférieur ou égal à 100.

5. Méthode de contrôle de cuiseur électrique selon l'une des revendications précédentes, **caractérisée en ce que** la température programmée est supérieure ou égale à 30°C et inférieure ou égale à 95°C, et la première durée programmée t1 est supérieure ou égale à 120 secondes et inférieure ou égale à 1200 secondes.

6. Méthode de contrôle de cuiseur électrique selon l'une des revendications 1 à 5, **caractérisée en ce que** la température programmée est supérieure ou égale à 60°C et inférieure ou égale à 80°C, et la première durée programmée t1 est supérieure ou égale à 600 secondes et inférieure ou égale à 900 secondes.

7. Méthode de contrôle de cuiseur électrique selon l'une des revendications précédentes , **caractérisée en ce que** lors de l'étape de cuisson à la vapeur du riz, l'élément chauffant (6) chauffe de manière continue le récipient interne (2), pendant une troisième durée programmée t3.

8. Méthode de contrôle de cuiseur électrique selon la revendication 7, **caractérisée en ce que** la troisième durée programmée t3 est supérieure ou égale à 1 seconde et inférieure ou égale à 1800 secondes.

9. Méthode de contrôle de cuiseur électrique selon l'une des revendications précédentes, **caractérisée en ce que** lors de l'étape de cuisson du riz à la vapeur, et dans une première phase, l'élément chauffant (6) chauffe de manière continue le récipient interne (2), pendant une quatrième durée programmée t4, puis dans une deuxième phase l'élément chauffant (6) cesse de fonctionner pendant une cinquième durée programmée t5, les première et deuxième phases sont répétées N2 fois avant l'arrêt du cuiseur électrique.

10. Méthode de contrôle de cuiseur électrique selon la revendication 9, **caractérisée en ce que** la quatrième durée programmée t4 est supérieure ou égale à 3 secondes et inférieure ou égale à 150 secondes, et la cinquième durée programmée t5 est supérieure ou égale à 3 secondes et inférieure ou égale à 150 secondes, et N2 est supérieur ou égal à 1 et inférieur ou égal à 100.

11. Méthode de contrôle de cuiseur électrique selon l'une des revendications précédentes , **caractérisée en ce qu'**avant l'étape de rinçage et cuisson à l'eau du riz, le rapport entre le poids G1 du riz se trouvant dans la chambre de remplissage (11) et le poids G2 de l'eau se trouvant dans le récipient interne (2) est supérieur ou égal à 0,1 et inférieur ou égal à 3.

12. Méthode de contrôle de cuiseur électrique selon l'une des revendications 1 à 11, **caractérisée en ce qu'**avant l'étape de rinçage et cuisson à l'eau du riz, le rapport entre le poids G1 du riz se trouvant dans la chambre de remplissage (11) et le poids G2 de l'eau se trouvant dans le récipient interne (2) est supérieur ou égal à 0,3 et inférieur ou égal à 1,2.
